# EUROPEAN PATENT APPLICATION

(11) **EP 4 257 806 A1**
(43) Date of publication of application: **11.10.2023**
(21) Application number: 23160924.9
(22) Date of filing: 09.03.2023
(51) Int. Cl.: F01D 21/00, G01M 13/028, G01M 15/14, G01N 22/02, G01N 29/14, G01N 29/24, G01N 29/44

(54) **METHODS AND SYSTEMS OF MONITORING A CONDITION OF A COMPONENT OF A GAS TURBINE ENGINE**

(30) Priority: 04.04.2022 GB 202204875
(71) Applicant: Rolls-Royce plc, London N1 9FX (GB)
(72) Inventor: Wall, Derek S, Derby, DE24 8BJ (GB); Douglas, Peter F, Derby, DE24 8BJ (GB)
(74) Representative: Rolls-Royce plc

(57) **Abstract**

Described herein is a method of monitoring a condition of a component of a gas turbine engine, comprising: obtaining, with a non-contact monitoring sensor, monitoring data, wherein a portion of the monitoring data relates to the condition of the component of the gas turbine engine; obtaining, using a position sensor, positional data relating to the component's position; communicating the monitoring data and the positional data to a processing module, and analysing, using the processing module, the monitoring data and positional data to determine the portion of the monitoring data which relates to the component and determine a condition of the component. Also described herein is a system for monitoring and a gas turbine engine comprising the system.

## Description

### TECHNICAL FIELD

This disclosure concerns a method of monitoring the condition of a component of a gas turbine engine, and an apparatus for monitoring.

### BACKGROUND

A typical gas turbine comprises an engine core, which is generally made up of one or more turbines which drive respective compressors via coaxial shafts. A low pressure turbine drives a low pressure shaft, which drives a low pressure compressor, such that the low pressure compressor rotates at the same speed as the low pressure turbine. In a gas turbine engine for aircraft propulsion, a fan is driven by the low pressure turbine and the airflow produced by the fan provides a major contribution to the thrust of the engine.

Regardless of the particular construction or purpose of a gas turbine engine, the turbines and compressors comprise blades which experience deterioration during service. The rate of deterioration is unpredictable as this is affected by conditions such as operational conditions, foreign object damage, pollutant levels etc, so regular assessment is required. The current approach requires a highly-trained field engineer to use manual inspection methods, using dedicated borescope access to key observation areas, typically at one or two locations such as the high pressure turbine blades.

More recent approaches exist which use cameras to inspect blades and relay information to a remote service engineer, or independently use other data, such as vibration to assess condition.

The current monitoring approaches involve significant time and financial costs. Furthermore, the known approaches may be subject to human error and there may be a delay involved in the detection of any damage.

It may therefore be desirable to provide an improved arrangement for monitoring the condition of components in a gas turbine engine.

### SUMMARY

According to an aspect of the present disclosure, there is provided herein a method of monitoring a condition of a component of a gas turbine engine, comprising: obtaining, with a monitoring sensor, monitoring data, wherein a portion of the monitoring data relates to the condition of the component of the gas turbine engine; obtaining, using a position sensor, positional data relating to the component's position; communicating the monitoring data and the positional data to a processing module, and analysing, using the processing module, the monitoring data and positional data to determine the portion of the monitoring data which relates to the component and determine a condition of the component.

The method may be performed during routine operation, e.g., during regular flight, of the gas turbine engine. The method may allow the collection of data during routine operation of the gas turbine engine. The quantity of data and the reliability of the determination of the condition may be improved. The time taken to detect an undesirable condition may be reduced.

The monitoring sensor may be mounted to the gas turbine engine. The monitoring sensor may be attached to the gas turbine engine at a location away from the component. The monitoring sensor may be attached to the gas turbine engine at a location remote from the component.

The monitoring sensor may be a sensor which detects an electromagnetic wave. The monitoring sensor may be a sensor which detects an electromagnetic wave which is indicative of a condition of the component. Analysis of the monitoring data, e.g., the electromagnetic wave, may provide information relating to the condition of the component.

The monitoring sensor may be a microelectromechanical systems (MEMS) sensor or piezoelectric sensor. The MEMS or piezoelectric sensor may be a vibration sensor.

The MEMS or piezoelectric sensor may be indirectly in contact with the component. The MEMS or piezoelectric sensor may be attached to a surface remote from the component, the surface being indirectly in contact with the component, such that monitoring data of the component may be obtained. The MEMS or piezoelectric sensor may comprise vibration data of the surface to which it is attached, which may be analysed to obtain monitoring data relating to the component. The MEMS or piezoelectric vibration sensor may obtain vibration data from which a condition of the component can be determined. A condition of the component may be determined from the vibration data.

The MEMS or piezoelectric sensor may be directly attached to the component. The monitoring data may comprise vibration data of the component.

The monitoring sensor may be attached to a stationary (i.e., non-rotating) part of the gas turbine engine. The monitoring sensor may be attached to a bearing housing. The monitoring sensor may be attached to an accessory unit, such as an electronic systems unit or a pump,

The monitoring sensor may be directly attached, or mounted, to the component to which the monitoring data relates. The monitoring sensor may be a non-contact monitoring sensor. The non-contact monitoring sensor may be a sensor which does not directly contact the component to which the monitoring data relates. The non-contact monitoring sensor may be a sensor which is not mounted to the component.

The non-contact monitoring sensor may be a camera, such as an optical camera. The non-contact monitoring sensor may be a high-definition camera. The camera may obtain an image of the component. The monitoring data may comprise an image of the component. The system may comprise a plurality of cameras. The system may comprise a plurality of high-definition cameras. The plurality of cameras, or high-definition cameras, may be arranged at a plurality of axial and/or circumferential positions in the engine.

The non-contact monitoring sensor may be a microwave sensor. The microwave sensor may obtain microwave frequency measurements of the component. The monitoring data may comprise microwave frequency measurements of the component.

The non-contact monitoring sensor may be a vibration sensor. The non-contact vibration sensor may be a laser doppler shift sensor. The monitoring data may comprise vibration data of the component.

The processing module may comprise a processor. The processing module may analyse the monitoring data from the monitoring sensor in order to determine a condition of the component. The processing module may analyse the monitoring data in order to detect any damage to the component. The processing module may compare the data with exemplary data in order to determine a condition of the component. The exemplary data may be indicative of a component with no damage.

The processor may process the received monitoring data to produce data related to the component. The data produced may be dependent upon the sensor type. For example, if the monitoring sensor is a microwave sensor, the monitoring data may be a received (reflected) microwave signal. The received microwave signal may provide a 3D profile of the component. If the monitoring sensor is a vibration sensor, the monitoring data may be vibration data including a vibration signature of the rotating assembly (including the component). The processing of the received monitoring data may be dependent on the sensor type. The processing of the monitoring data may include low level processing such as conversion from analogue to digital, digital sampling, filtering, convolution. The processing of the monitoring data may include high level processing such as Fast Fourier Transformation to extract frequency information from the processed signal.

The processing module may comprise memory. The processing module may store the monitoring data and the positional data in the memory. The analysis to determine the portion of the monitoring data which relates to the component and determine a condition of the component may take place immediately after the obtaining of the monitoring and positional data. The analysis to determine the portion of the monitoring data which relates to the component and determine a condition of the component may take place simultaneously during the obtaining of the monitoring and positional data, i.e., the analysis of a portion of the monitoring and positional data may be carried out whilst further monitoring and positional data is being obtained. The analysis to determine the portion of the monitoring data which relates to the component and determine a condition of the component may take place at a later time than the obtaining of the data.

At least a part of the processing module may be onboard (i.e., mechanically coupled to) the gas turbine engine and/or the associated vehicle, such as the aircraft. At least a part of the processing module may be offboard (i.e., remote from the gas turbine engine and/or remote from the associated vehicle, such as the aircraft).

The processing module may be communicatively coupled to the monitoring sensor and the position sensor via wires. The processing module may be communicatively coupled to the monitoring sensor and the position sensor wirelessly.

The condition of the component may be a safe condition. The safe condition may indicate no damage is present in the component. The safe condition may indicate no defects are present in the component. The safe condition may indicate only a minimal, or sub-threshold, amount of damage is present in the component. The safe condition may indicate that no maintenance actions are required.

The condition of the component may be an unsafe condition. The unsafe condition may be a failure condition. The unsafe condition may mean that an amount of damage over a safety threshold is present in the component.

The condition of the component may be a maintenance condition. The maintenance condition may indicate that maintenance is required to the completed. The maintenance condition may indicate the position of the component which requires maintenance. The maintenance condition may indicate the maintenance actions that are required to be completed.

The determination of the condition of the component may indicate that further diagnostics are required. Further diagnostics may be required to confirm the condition of the component. Further diagnostics may be required to increase the confidence in the condition of the component.

There may be a plurality of monitoring sensors arranged in a plurality of positions of the engine. There may be a plurality of monitoring sensors arranged in a plurality of axial positions of the engine. There may be a plurality of monitoring sensors arranged in a plurality of circumferential positions of the engine. The plurality of monitoring sensors may be of the same type or of different types. The processing module may analyse monitoring data from the plurality of monitoring sensors to determine the condition of the component. The processing module may be configurable to analyse data from a single monitoring sensor, or from a selection of monitoring sensors (i.e., some or all) of the plurality of monitoring sensors.

The component may be a rotatable component, configured to rotate around a shaft of the gas turbine engine. The shaft may be an axial shaft. The component may rotate around the shaft in a circumferential direction. The component may be coupled to the shaft such that rotation of the shaft results in rotation of the component. The obtaining monitoring data and positional data may take place during rotation of the component around the shaft. The shaft may be a low pressure, intermediate pressure, or high pressure shaft.

The component may be a turbine blade or a fan blade. The component may be an individual turbine blade or an individual fan blade. The component may be a shaft of the engine. The component may be a shaft bearing assembly. The engine may comprise a plurality of components joined together to form a larger assembly, e.g., a fan assembly comprising a plurality of fan blades, or a turbine assembly comprising a plurality of turbine blades, or may be a machine-formed single component (i.e., a bladed disc, or a "blisk") comprising multiple fan or turbine blades. The method may comprise monitoring a plurality of components, such as a plurality of fan blades and/or a plurality of turbine blades of an assembly or bladed disc, to determine the condition of the assembly or bladed disc as a whole.

The positional data may comprise data which indicates the position of the component relative to a frame of reference. The positional data may comprise data which indicates the position of the component relative to a fixed frame of reference. The frame of reference may be based upon a part of the engine which remains in a fixed position relative to the component. If the component is coupled to the shaft, such that rotation of the shaft results in rotation of the component, the frame of reference may be based upon the shaft.

The position sensor may comprise an optical encoder. The position sensor may comprise a camera. The position sensor may comprise a magnetic inductance pulse probe. The magnetic inductance pulse probe may be shaft mounted. The magnetic inductance pulse probe may operate in conjunction with a phonic wheel having a short tooth to provide a positional reference.

The positional data and monitoring data may include time data. Determining the portion of the monitoring data which relates to the component may include pairing the positional data with the monitoring data based upon the time data. The monitoring data may include time data including how the monitoring data varies with time. The positional data may include time data including how the positional data varies with time. Data relating to the speed of the component may be derived from analysis of how the positional data varies with time.

The monitoring data may comprise data relating to the condition of each of a plurality of components of the gas turbine engine. The positional data may relate to the position of each of the plurality of components, and the analysing may comprise analysing the monitoring data and positional data to determine the portion of the monitoring data which relates to each of the plurality of components and determine a condition of each of the plurality of components.

The method may further comprise obtaining shaft speed data with a speed sensor and communicating the shaft speed data to the processing module. The processing module may determine the condition of the component based upon the shaft speed data. The shaft speed data may comprise data relating to the shaft speed. The shaft speed data may comprise data relating to the rotational frequency of the shaft. The shaft speed data may include data from which a condition of the component may be determined (i.e., may include monitoring data), such as torsional or higher frequency signals which provide an indication of the rotating assembly (e.g., fan) condition. For instance, if a fan blade has a small damage defect, this may affect the measured frequency signal (e.g., from a pulse probe) which may enable determination of the condition of the fan. In this way, the speed sensor may be a monitoring sensor.

The component may be fixedly coupled to the shaft such that the component rotates around the shaft when the shaft is rotated. The speed of the component may be derived from the speed of the shaft. The shaft speed data may include time data. The speed data may include time data including how the speed of the shaft varies with time. The processing module may pair the shaft speed data with the monitoring data and the positional data based upon the time data. The positional data may include the shaft speed data.

The processor may combine the data from the monitoring sensor(s) and/or speed sensor and/or position sensor to obtain a condition of the component. The combination of the data from the monitoring sensor(s) and/or speed sensor and/or position sensor may be combined algorithmically.

The speed sensor may be a magnetic inductance pulse probe and the shaft speed data may be pulse probe data. The magnetic inductance pulse probe may be shaft mounted. The shaft speed data may be analysed to extract torsional characteristics or higher frequency signals. The torsional characteristics may indicate a condition of the component. The shaft mounted magnetic inductance pulse probe may operate in conjunction with a phonic wheel having a short tooth. The method may comprise rotating the shaft with an electrically-powered motor. The motor may be coupled to the shaft. The motor may be configured to drive rotation of the shaft. The motor may be directly coupled to the shaft. The motor may be coupled to the shaft via a gearbox. The motor may include the speed sensor. The motor may include the position sensor. The motor may collect motor phase data. The motor phase data may be monitoring data for determination of the condition of the component. High frequency FFT analysis of the motor phase data may be used to extract component condition changes. There may be a motor coupled to one or more of the low pressure shaft, the intermediate pressure shaft, and the high pressure shaft.

The obtaining of the monitoring data may be synchronised with an electric motor position pulse, e.g., a phase locked loop.

Rotating the shaft may cause rotation of the component. The electrically-powered motor may be an electrical starter generator. The electrically-powered motor may be used to start up the engine. The electrical motor generator may be used as a generator to power auxiliary electrical devices during routine operation, e.g., during regular flight, of the gas turbine engine.

The electrically-powered motor may enable dedicated testing of the gas turbine engine. The dedicated testing may comprise a test procedure during a maintenance period, e.g., when the engine is on the ground, or not in routine operation. Dedicated testing may further improve the assessment of the condition of the component.

The monitoring system may comprise a control system and the control system may control the motor so as to adjust the speed and/or rotational position of the shaft. The control system may adjust the speed and/or rotational position of the shaft in order to obtain monitoring data at a range of speeds and/or rotational positions of the shaft.

The processing module may communicate a test procedure to the control system, and the control system may execute the test procedure. The test procedure may comprise: adjusting the speed and/or rotational position of the shaft using the motor; and obtaining monitoring data at a range of speeds and/or rotational positions. Analysing the monitoring data to determine a condition of the component may comprise analysis of the monitoring data obtained at the range of speeds and/or rotational positions. The test procedure may comprise a series of tests at a range of speeds and/or rotational positions. The test procedure may be a generic test procedure. The test procedure may be tailored to the component, based upon the determined condition of the component from a previous test. The test procedure may be stored within a memory of the processing module. The test procedure may be communicated to the processing module from a database communicatively coupled to the processing module.

The analysis of the monitoring data may include determining a level of confidence in the condition of the component. The system may execute a series of tests until a threshold level of confidence in the condition is achieved.

The processing module may communicate a test procedure to the control system, the control system may execute the test procedure, and the processing module may analyse the obtained data and communicate a further test procedure to the control system for execution. This process may be repeated until a certain number of tests have been carried out, or a threshold level of confidence in the determined condition is achieved.

The processing module may be configurable to select a single monitoring sensor, or a selection of monitoring sensors (i.e., some or all) of the plurality of monitoring sensors from which data should be obtained.

The processing module may be communicatively coupled to data sets relating to other gas turbine engines, and before communicating the test procedure to the control system, the processing module may compute the test procedure. The processing module may compute the test procedure using an artificial intelligence method based upon the data sets relating to other gas turbine engines. The artificial intelligence method may be a deep neural network.

The data sets relating to other gas turbine engines may relate to a specific type of engine. The data sets relating to other gas turbine engines may relate to a specific fleet of engines.

The processing module may compare the monitoring data and positional data to the data sets relating to the other gas turbine engines. The processing module may execute learning algorithms to improve the determination of the condition over time. The learning algorithms may be based upon the data sets relating to other gas turbine engines. The learning algorithms may be based upon a pre-trained deep neural network.

According to an additional aspect of the present disclosure, there is described a computer-implemented method comprising the steps according to any of the above statements.

According to an additional aspect of the present disclosure, there is described a data processing apparatus comprising means for carrying out the method any of the above statements.

According to an additional aspect of the present disclosure, there is described a computer program product comprising instructions which, when the program is executed by a computer, cause the computer to carry out the method of any of the above statements.

According to an additional aspect of the present disclosure, there is described a computer-readable storage medium comprising instructions which, when executed by a computer, cause the computer to carry out the method of any of the above statements.

According to a further aspect of the present disclosure, there is described a monitoring system for monitoring a condition of a component of a gas turbine engine comprising: a - monitoring sensor, the monitoring sensor configured to obtain monitoring data, wherein a portion of the monitoring data relates to the condition of the component of the gas turbine engine; a position sensor for obtaining positional data relating to the component's position; a processing module configured to communicate with the position sensor and monitoring sensor, and configured to analyse the monitoring data and positional data to determine the portion of the monitoring data which relates to the component and determine a condition of the component.

The monitoring sensor may comprise at least one of: a camera, a vibration sensor, and a microwave sensor.

The component may be a rotatable component coupled to a shaft of the gas turbine engine and may be configured to be rotatable around the shaft. The monitoring sensor and the position sensor may be configured to obtain data during rotation of the component around the shaft.

The system may further comprise a speed sensor configured to obtain shaft speed data and communicate the shaft speed data to the processing module. The processing module may be configured to determine the condition of the component based upon the shaft speed data.

The system may further comprise an electrically-powered motor configured to rotate the shaft.

The monitoring system may comprise a control system configured to control the motor so as to adjust the speed and/or rotational position of the shaft.

The processing module may be configured to communicate a test procedure to the control system. The control system may be configured to execute the test procedure. The test procedure may comprise: using the motor to adjust the speed and/or rotational position of the shaft; and obtaining monitoring data at a range of speeds and/or rotational positions, wherein the analysis of monitoring data to determine a condition of the component comprises analysis of the monitoring data obtained at the range of speeds and/or rotational positions.

The processing module may comprise a computer remote from the sensors. The processing module may comprise a computer remote from the gas turbine engine.

According to an additional aspect of the present disclosure, there is described a gas turbine engine comprising a monitoring system according to any of the above claims, wherein the monitoring sensor is mounted to the gas turbine engine.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

According to an aspect of the present disclosure, there is provided an aircraft comprising a gas turbine engine as described and/or claimed herein.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a sectional side view of an onboard part of a monitoring system;
**Figure 5** is a sectional side view of an offboard part of a monitoring system;
**Figure 6** is a flowchart of a monitoring method; and
**Figure 7** is a flowchart of an additional monitoring method.

### DETAILED DESCRIPTION

### Figure 1

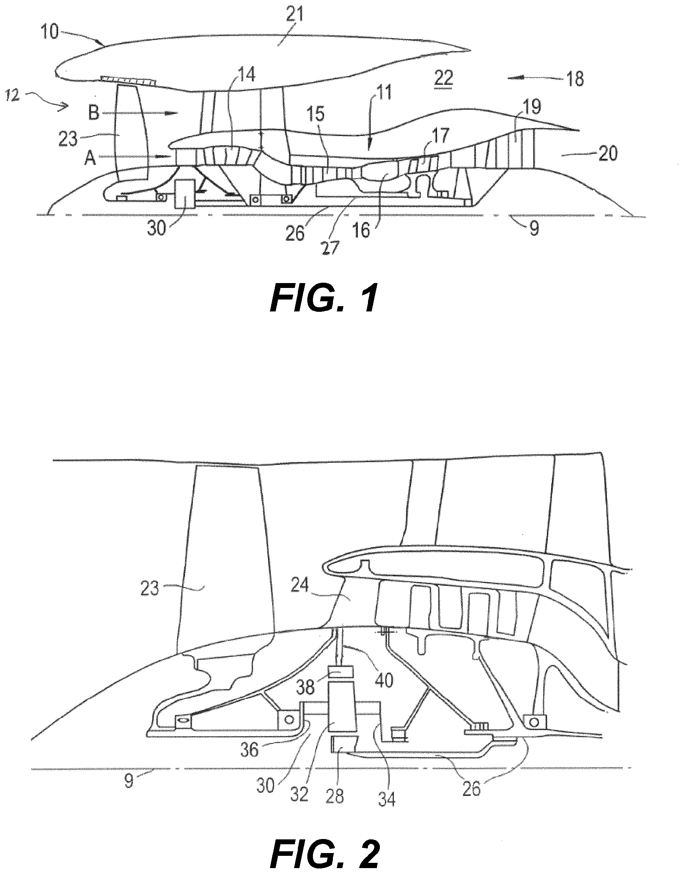

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

### Figure 2

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to process around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used in the description relating to Figures 1-3 may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, including the remainder of this specification, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

### Figure 3

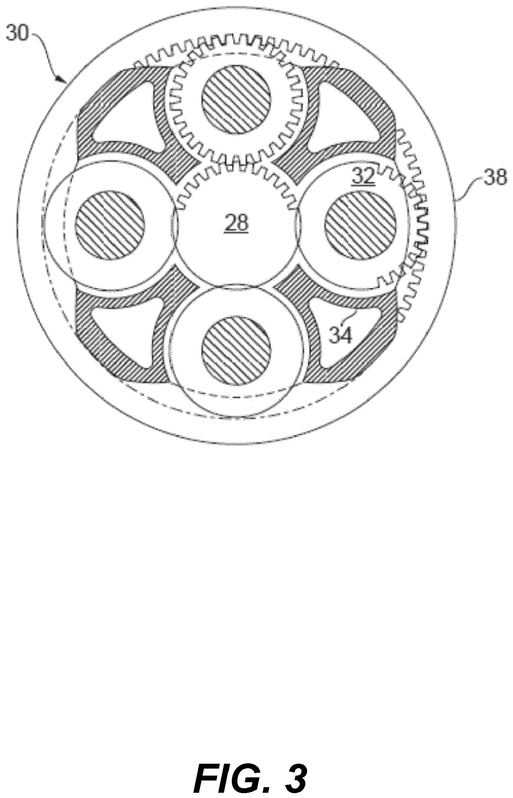

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input, and output shaft arrangement, and bearing locations.

Optionally, the gearbox may drive additional and/or alternative components (e.g., the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

### Figure 4

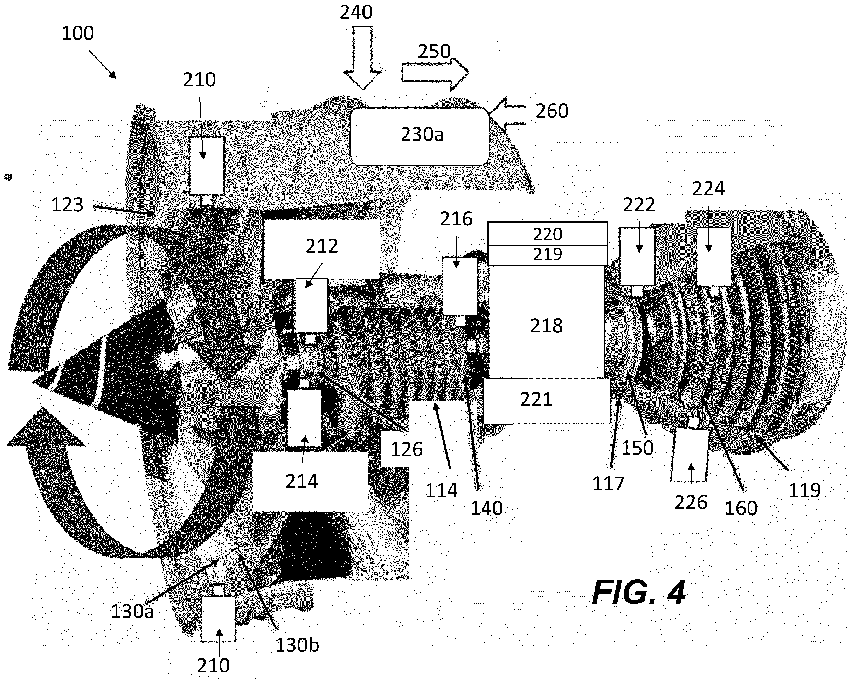

Figure 4 illustrates a gas turbine engine 100 comprising many of the features shown in and described with reference to Figures 1-3. However, for simplicity this gas turbine engine 100 will be shown and described without a gearbox for driving a fan 123. The gas turbine engine 100 is a three-shaft gas turbine engine. It will therefore be appreciated that in this example, the engine comprises, in an axial flow direction, a fan (or low pressure compressor) 123, an intermediate pressure compressor 114, a high pressure compressor (not shown), a high pressure turbine 117, an intermediate pressure turbine 118 and a low pressure turbine 119. The fan 123 and low pressure turbine 119 are attached to a low pressure shaft 126, such that the low pressure turbine 119 drives rotation of the low pressure shaft 126 and the fan 123. The intermediate pressure compressor 114 and intermediate pressure turbine 118 are attached to an intermediate pressure shaft (not shown) 128, such that the intermediate pressure turbine 118 drives rotation of the intermediate pressure shaft 128 and the intermediate pressure compressor 114. The high pressure compressor 115 and high pressure turbine 117 are attached to a high pressure shaft 127 (not shown), such that the high pressure turbine 117 drives rotation of the high pressure shaft 127 and the high pressure compressor 115. It will be appreciated that the monitoring system as described herein could also be used on an engine comprising a gearbox as described above.

The engine as shown in Figure 4 further comprises a monitoring system 200 for monitoring the condition of a plurality of components of the engine 100, i.e., whether there is any damage to or defects in any of the monitored components.

In this example, the plurality of components comprises a plurality of fan blades 130 of the fan 123, a plurality of intermediate pressure compressor blades 140 of the intermediate pressure compressor 114, a plurality of high pressure turbine blades 150 of the high pressure turbine 117, and a plurality of low pressure turbine blades 160 of the low pressure turbine 119. It will be appreciated that the arrangement of the system 200 as described herein may be adapted to monitor other components of the engine 100. The monitoring system 200 comprises an onboard apparatus (i.e., mounted on the engine 100) and an offboard apparatus remote from but communicatively coupled to the engine 100. The onboard apparatus comprises a plurality of monitoring sensors 210, 214, 216, 222, 224, 226.

As shown in Figure 4, a first plurality of monitoring sensors, in this example, non-contact monitoring sensors comprising cameras 210, are arranged to obtain monitoring data relating to the condition of a plurality of fan blades 130. The cameras 210 are mounted to an inner surface of the nacelle 21 of the engine 100. The cameras 210 are arranged at positions radially opposite to one another. The cameras 210 are configured to obtain monitoring data, in this example image data. The cameras 210 are arranged radially outwards of the fan 23 and directed towards the fan 23. The cameras in this example are high-definition cameras, although it will be appreciated that in other examples, other cameras may be used, the cameras may be located in different radial positions, and/or the monitoring system may only comprise a single camera.

The fan 123 is attached to the low pressure shaft 126 and comprises a plurality of fan blades 130, which are driven to rotate around the shaft 126 by the low pressure turbine 119. It will be appreciated that as the fan 123 rotates around the shaft 126, each of the fan blades 130 will be sequentially visible to the cameras 210. When the fan blades 130 are rotating around the shaft 126, in a series of images taken over time, image data from a plurality of fan blades 130 (e.g., first fan blade 130a and second fan blade 130b) may be obtained. Therefore, it will be understood that there is a portion of the obtained monitoring data (image data) which relates to a single fan blade 130. The cameras 210 obtain image data over a period of time, and time data relating the measured time period, for subsequent analysis.

The on board apparatus of the monitoring system further comprises an electrical motor 218 which is mechanically coupled to the low pressure shaft 126. The electrical motor 218 is an electrical starter generator. The electrical motor 218 can be used to drive the shaft 126 (and therefore any components coupled to the shaft 126). In other examples, there may be a separate motor (such as an electrical starter generator) mechanically coupled to the intermediate and/or high pressure shafts. In such arrangements, the motor can be used to drive the shaft to which it is coupled, and any components coupled to the shaft and/or can be used to determine a speed and/or position of the shaft. The motor 218 can be operated to adjust the position and speed of the shaft 126. The motor 218 also comprises a control system 221, a position sensor 219 and a speed sensor 220 to enable accurate control of the position and speed of the motor 218. The electrical motor 218 can be used to perform a dedicated test procedure, i.e., when the gas turbine engine is not in routine operation, as will be explained in greater detail below.

The monitoring system 200 also comprises a position sensor 219. In this example the position sensor 219 is part of the electrical motor 218. The position sensor 219 is a sensor which obtains positional data, in this example in the form of motor phase outputs. The positional data includes data which indicates the position of the component relative to a fixed frame of reference, i.e., a part of the engine which remains in a fixed position relative to the component. The shaft position and therefore the position of the component can be calculated based upon the motor phase outputs. In alternative examples, the position sensor 219 may be an independent sensor (i.e., not a part of the motor) configured to obtain positional data, such as an optical encoder, or a camera, or a phonic wheel having a short tooth and a magnetic inductance pulse probe, or a combination thereof.

The motor phase data may also be used as additional monitoring data for determination of the condition of the component. For example, high frequency FFT analysis of the motor phase data may be used to extract component condition changes.

The monitoring system 200 also comprises a speed sensor 212, which is configured to obtain shaft speed data. In this example, the speed sensor 212 is configured to obtain speed data relating to the low-pressure shaft 126. As the fan is coupled to the low-pressure shaft 126, the speed of the fan blades can be obtained from the shaft speed data. The speed sensor 212 obtains data relating to how the speed of the shaft varies with time, for subsequent analysis. The speed sensor 212 is a magnetic inductance pulse probe. The shaft speed data may be analysed to extract higher order frequency signals or torsional characteristics, in order to determine a condition of the fan blade. In other words, the speed sensor 212 could be considered as an additional monitoring sensor providing monitoring data in the form of the speed data.

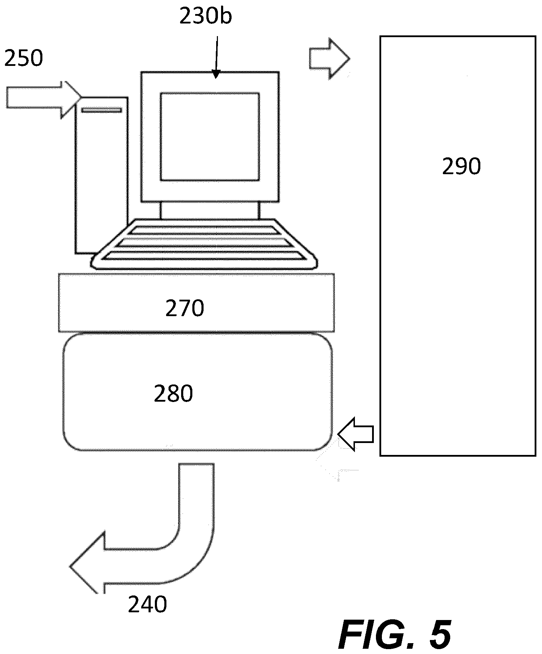

The monitoring system 200 also comprises a processing module 230. The processing module 230 comprises an onboard (i.e., coupled to the engine 100) data processor 230a and an offboard (i.e., remote from the engine 100) computer 230b having a processor 270 (shown in Figure 5). Each of the monitoring sensor210, the position sensor 219, the speed sensor 212, and the control system 221 of the electric motor 218 is communicatively coupled via a connection 260 with the onboard data processor 230a. In this example, the communicative connection 260 is wireless, however in other examples, the connection 260 may comprise wires.

The data processor 230a is configured to receive the monitoring data, the positional data, and the speed data from the monitoring sensor 210, the position sensor 219 and the speed sensor 212. The data processor 230a is configured to analyse the data to determine the portion of the monitoring data which relates to each individual fan blade 130, based upon the time data.

In this regard, the data processor 230a is configured to "match-up" the monitoring data, the positional data and the speed data based on a time frame of the data. In this way, the data processor 230a can determine which fan blade each portion of the monitoring data relates to (based upon the positional data), the speed at which the fan blade was travelling during the monitoring (based upon the shaft speed data) and a condition of each individual fan blade 130 (based upon the monitoring data) can be determined. Accordingly, the condition of the entire fan assembly or bladed disc of fan blades 130 can be determined, and any damage or defects can be correctly mapped to a particular fan blade 130.

The data processor 230a is configured to indicate, such as on a display (not shown) to an operator the determined condition and the position of the component within the engine.

For example, if no damage or defects are found, or are below a threshold size or number, the data processor 230a indicates the component is safe and that no maintenance is required.

Alternatively, if damage or defects are found, or are above a threshold size or number, the data processor 230a indicates that the component is unsafe (or close to failure) and that the component should be taken out of use.

The data processor 230a may indicate that maintenance to a component is required and define the position of the component and the maintenance actions that are required to be completed.

The determination of the condition of the component may be inconclusive, in which case the data processor 230a may indicate that further diagnostics, such as the execution of a dedicated test procedure, are required to confirm the condition of the component or to increase the confidence in the condition of the component.

The data processor 230a is wirelessly connected to the offboard computer 230b via connection 250. The data processor 230a can communicate data including the determined condition of the fan blades 130 to the computer 230b via the connection 250. The computer 230b can carry out further analysis on the communicated data using the processor 270.

The processor 270 is configured to analyse the communicated data from the data processor 230a and if necessary, provide a test procedure, which is sent back to the data processor 230a via connection 240. The test comprises a series of instructions for execution by the control system 221 of the motor 218, including a sequence of speeds and rotational positions at which monitoring data should be obtained. The test procedure can be a generic test procedure based upon test procedures stored in a memory, or may be tailored to the engine 100, based upon the data obtained and analysed by the monitoring system 200.

### Figure 5

As shown in Figure 5, the computer 230b comprises the processor 270 and a learning system 280 and is connected to an information centre 290. The information centre 290 provides exemplary data, as well as data obtained from other monitoring systems installed on engines of the same type. The learning system 280 uses a data analysis method including algorithms which are configured to compare the data obtained by the monitoring system 200 with data obtained from the information centre 290. The learning system 280 is configured to design test procedures based upon the data obtained and analysed by the monitoring system 200 and the data obtained from the information centre 290. The learning system 280 may use an artificial intelligence method, such as machine learning in the form of a deep neural network which has been pre-trained based upon the data from the information centre 290.

Results of test procedures are analysed and communicated back to the computer 230b, and the learning system 280 designs further based upon the results, in a feedback loop. The computer 230b determines a level of confidence in the condition of each of the fan blades 130 and repeats the feedback loop until a desired level of confidence is achieved.

The plurality of monitoring sensors further comprises a vibration sensor 214, which is configured to obtain vibration data. In this example, the vibration sensor 214 is mounted to a front bearing housing (not shown) around the low pressure shaft 126. The vibration sensor 214 is configured to obtain vibration data relating to the bearing housing, which can be analysed to determine a condition of the low pressure shaft 126. The vibration sensor provides a periodic vibration signature of the rotating assembly (including the low pressure shaft 126) The vibration sensor 214 obtains vibration data over a period of time, and time data relating to the measured time period, for subsequent analysis. The vibration sensor in this example is a microelectromechanical systems (MEMS) vibration sensor.

The data processor 230a is configured to receive the vibration data, the positional data, and the speed data from the vibration sensor 214, the position sensor 219 and the speed sensor 212. The data processor 230a is configured to analyse the data to determine the portion of the monitoring data which relates to the shaft.

In this regard, the data processor 230a is configured to "match-up" the monitoring data, the positional data and the speed data based on a time frame of the data. In this way, the data processor 230a can determine the position of the low pressure shaft when each portion of the monitoring data was obtained (based upon the positional data), the speed at which the low pressure shaft 126 was travelling during the monitoring, and a condition of the low pressure shaft 126 (based upon the monitoring data) can be determined. Accordingly, the condition of the shaft can be determined, and any damage or defects can be correlated with the position of the shaft at which the monitoring data was obtained.

The data processor 230a is configured to indicate, such as on a display (not shown) to an operator the determined condition and the position of the shaft at which the monitoring data was obtained.

Referring back to Figure 4, the monitoring system further comprises a monitoring sensor in the form of a vibration sensor 216, configured to obtain monitoring data relating to a plurality of compressor blades 140 of the intermediate pressure compressor 114. The vibration sensor 216 obtains vibration data over a period of time, and time data relating the measured time period, for subsequent analysis. The vibration sensor 216 in this example is a non-contact monitoring sensor in the form of a laser doppler shift sensor, configured to obtain vibration data from a surface of the compressor blades 140. Positional data relating to the compressor blades 140 is determined based upon positional data of the intermediate pressure shaft 128 obtained from a position sensor, such as a phonic wheel and magnetic inductance pulse probe, an optical encoder, or as part of a motor (such as an electrical starter generator) mechanically coupled to the intermediate shaft.

As also shown on Figure 4, the monitoring system further comprises a monitoring sensor in the form of a microwave sensor 222, configured to obtain monitoring data relating to a plurality of turbine blades 150 of the high pressure turbine117. The microwave sensor obtains monitoring data based upon microwave frequency measurements of each of the turbine blades 150. Positional data relating to the turbine blades 150 is determined based upon positional data of the high pressure shaft 127 obtained from a position sensor, such as a phonic wheel and magnetic inductance pulse probe, an optical encoder, or as part of a motor (such as an electrical starter generator) mechanically coupled to the high pressure shaft 127.

Figure 4 also shows that the monitoring system further comprises a plurality of monitoring sensors in the form of a vibration sensor 224, and a high-definition camera 226, configured to obtain monitoring data relating to a plurality of turbine blades 160 of the low pressure turbine 119. In this example, the vibration sensor 224 is a non-contact monitoring sensor in the form of a laser doppler shift sensor and operates to obtain monitoring data in the form of vibration data of a surface of a turbine blade 160. The microwave sensor obtains monitoring data based upon microwave frequency measurements of each of the turbine blades 160. The microwave sensor obtains a reflected microwave signal from the component to provide a 3D profile of the component. Positional data relating to the turbine blades 160 is obtained by a position sensor 219 which is a part of the motor 218, as described above with relation to the fan blades. The position of the low pressure shaft 126, and therefore the position of the low pressure turbine 119 which is coupled to the low pressure shaft 126 can be calculated based upon the motor phase outputs. The positional data includes data indicating the position of the monitored turbine blade 160 relative to a fixed frame of reference.

The processing module 230 is configured to receive and analyse the data from the monitoring sensors 214, 216, 222, 224 and 226 and the positional sensors 219 in an analogous way to that described above for the fan blades, in order to determine a condition of the plurality of components. It will be understood that for each component, there may be a plurality of monitoring sensors arranged to obtain monitoring data relating to that component, and that the monitoring data from each of the plurality of monitoring sensors may be combined to improve a determination of the condition of the component.

It will be appreciated by the skilled person that the types and positions of the sensors as described above may be adapted accordingly, to monitor a plurality of components of the engine.

### Figure 6

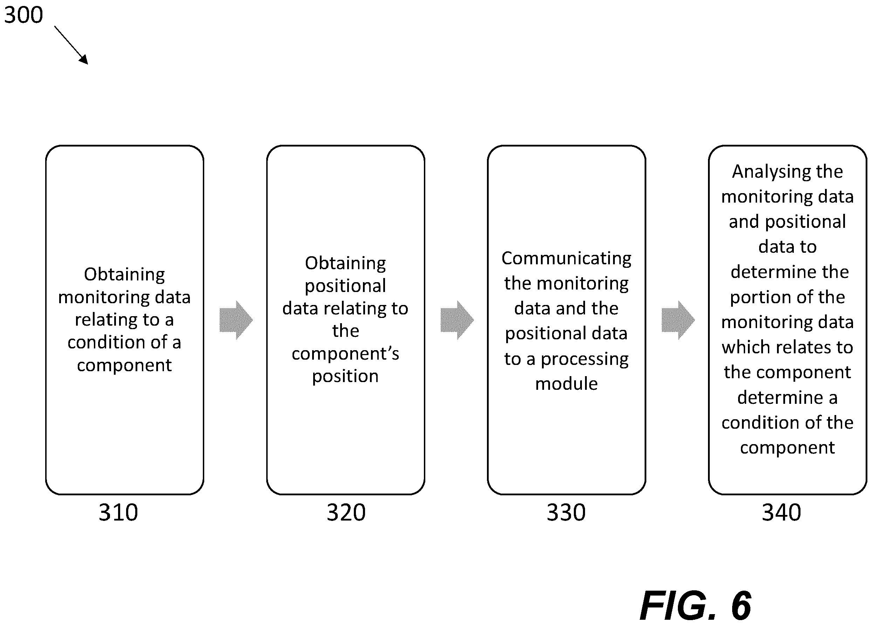

A method 300 of monitoring a condition of a component of a gas turbine engine will now be described with reference to the method steps as shown in Figure 6 and to the system 200 as described above. The method will be described with relation to a component comprising a fan blade using the sensors as described above. It will be appreciated that the method may be used to determine the condition of a plurality of fan blades, and/or a plurality of other engine components, including shaft, compressor and turbine blades as described above.

The method 300 can be used to collect monitoring data during routine operation of the gas turbine engine, i.e., when the engine is in flight and a plurality of fan blades 130 are rotating around the shaft 126. The quantity of data and the reliability of the determination of the condition may be improved. The time taken to detect an undesirable condition may be reduced.

A first step 310 of the method 300 comprises obtaining monitoring data relating to a condition of each fan blade 130, with a non-contact monitoring sensor. In this example, high-definition cameras 210 are used to obtain optical images of each fan blade 130 respectively. As all of the fan blades 130 are substantially identical, it should be understood that it is not possible to tell simply from an image of one fan blade the identity of that particular fan blade.

A second step 320 of the method comprises obtaining using the position sensor 219, positional data relating to each fan blade's position. As the monitoring data and positional data is obtained whilst the plurality of fan blades 130 are rotating around the shaft 126, the positional data relates the position of each individual monitored fan blade 130 relative to a fixed reference frame, so that the correct monitoring data can be assigned to the correct fan blade 130.

The first and second step 310, 320 of the method 300 are generally carried out at the same time. Time data is included in each of the monitoring data and the positional data, such that the portion of the monitoring data and the positional data can be combined by the processor, as will be discussed below, to determine the portion of the monitoring data which relates to each individual fan blade 130.

The third step 330 comprises communicating the monitoring data and the positional data to the on board data processor 230a of the processing module 230, via connection 260. The data is communicated via connection 250 to the off board computer 230b, which communicates data to the information centre 290.

The processing module 230 performs analysis of the monitoring data and the positional data to determine the portion of the monitoring data which relates to each individual fan blade 130 by pairing the data using the time data. The processing module 230 also performs analysis of the monitoring data to determine a condition, i.e., if there are any defects in or damage to each fan blade 130. If a particular fan blade 130 is determined to be damaged, the position of the damaged fan blade 130 and the determined condition will be indicated to an operator. The analysis of the monitoring data further includes determining a level of confidence in the condition of the component, which is also indicated to an operator. Based on the analysis, the operator may decide to perform further tests as described below, may take the engine out of operation permanently, may perform maintenance, or may let the engine continue in normal operation. Shaft speed data is also obtained by the speed sensor 212 and is communicated to the processing module 230. The shaft speed data is used to determine the speed at which the fan blade 130 is rotating when the monitoring data is obtained, which can be used to help determine conditions.

### Figure 7

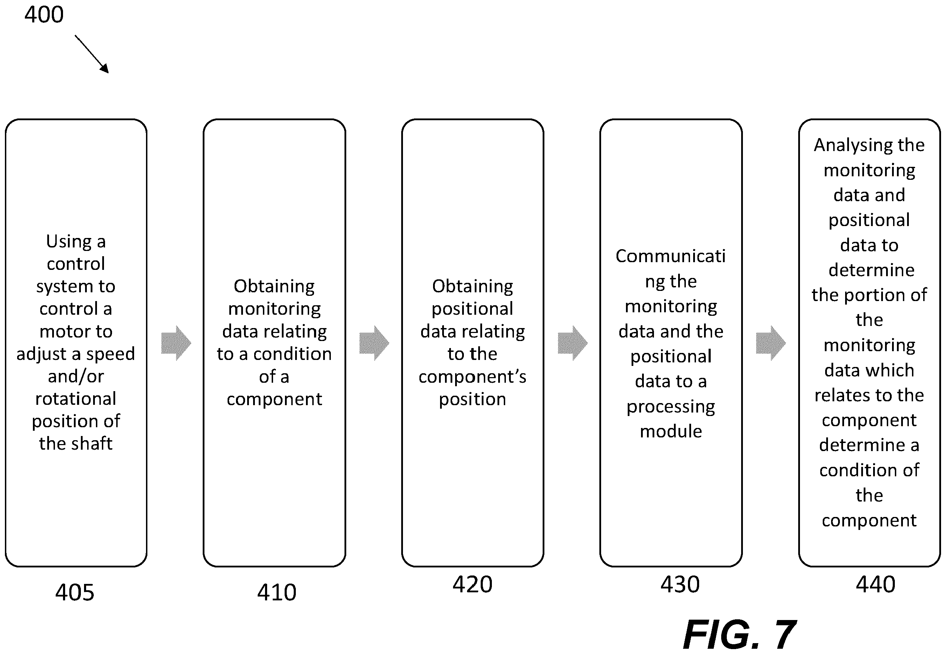

A further method 400 is described with reference to Figure 7. The method 400 can be used to collect monitoring data during a dedicated maintenance period of the gas turbine engine, i.e., when the engine is on the ground, or not in routine operation. Dedicated testing may further improve the assessment of the condition of the component.

In addition to the method steps described above with reference to Figure 6 (which have been indicated in Figure 7 with like reference numerals, increased by 100), the method 400 includes a step 405 of using the control system 221 to control the electric motor 218 to adjust the speed and/or rotational position of the shaft 126.

The control system 221 executes a test procedure which has been communicated to it from the processing module 230, such that monitoring data (i.e., optical images from cameras 210 can be obtained at a range of speeds and/or rotational positions. By analysing monitoring data from a range of speeds and or rotational positions, additional conditions of the component may be identified.

The test procedure to be executed is a generic test procedure selected from a test procedure database stored within a memory of the processing module 230. In other examples, the processing module 230 may tailor a test procedure based upon analysis of the monitoring data from a previous test. This process may be repeated until a certain number of tests have been carried out, or a threshold level of confidence in the determined condition is achieved.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

According to an aspect of the present disclosure, there is provided an aircraft comprising a gas turbine engine as described and/or claimed herein.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein. The scope of protection is defined in the appended claims.

## Claims

1. A method of monitoring a condition of a component (130, 140, 150, 160) of a gas turbine engine (10), comprising:
obtaining (310), with a monitoring sensor (210, 214, 216, 222, 224, 226), monitoring data, wherein a portion of the monitoring data relates to the condition of the component (130, 140, 150, 160) of the gas turbine engine (10);
obtaining (320), using a position sensor (219), positional data relating to the component's position;
communicating (330) the monitoring data and the positional data to a processing module (230), and
analysing (340), using the processing module (230), the monitoring data and positional data to determine the portion of the monitoring data which relates to the component (130, 140, 150, 160) and determine a condition of the component (130, 140, 150, 160).

2. The method according to Claim 1, wherein the positional data and monitoring data include time data, and wherein determining the portion of the monitoring data which relates to the component (130, 140, 150, 160) includes pairing the positional data with the monitoring data based upon the time data.

3. The method according to Claim 1 or Claim 2, wherein the monitoring data comprises data relating to the condition of each of a plurality of components (130, 140, 150, 160) of the gas turbine engine (10),
the positional data relates to the position of each of the plurality of components (130, 140, 150, 160), and
wherein the analysing comprises analysing the monitoring data and positional data to determine the portion of the monitoring data which relates to each of the plurality of components (130, 140, 150, 160) and determine a condition of each of the plurality of components (130, 140, 150, 160).

4. The method according to any one of the preceding claims, wherein the component (130, 140, 150, 160) is a rotatable component, configured to rotate around a shaft (126, 127,128) of the gas turbine engine (10), and wherein the obtaining monitoring data and positional data takes place during rotation of the component around the shaft (126).

5. The method according to Claim 4, wherein the method further comprises obtaining the shaft speed with a speed sensor (212, 220) and communicating the shaft speed data to the processing module (230), the processing module (230) determining the condition of the component (130, 140, 150, 160) based upon the shaft speed data.

6. The method according to Claim 4 or Claim 5, comprising rotating the shaft (126, 127, 128) with an electrically-powered motor (218).

7. The method according to Claim 6, wherein the processing module (230) comprises a control system (221) and the control system (221) controls the motor (218) so as to adjust the speed and/or rotational position of the shaft (126, 127, 128).

8. The method according to Claim 7, wherein the processing module (230) communicates a test procedure to the control system (221), and the control system (221) executes the test procedure, the test procedure comprising:
adjusting the speed and/or rotational position of the shaft (126, 127, 128) using the motor (218); and
obtaining monitoring data at a range of speeds and/or rotational positions,
wherein analysing the monitoring data to determine a condition of the component (130, 140, 150, 160) comprises analysis of the monitoring data obtained at the range of speeds and/or rotational positions.

9. The method according to Claim 8, wherein the processing module (230) is communicatively coupled to data sets relating to other gas turbine engines, and before communicating the test procedure to the control system (221), the processing module (230) computes the test procedure, using an artificial intelligence method based upon the data sets relating to other gas turbine engines.

10. A monitoring system (200) for monitoring a condition of a component (130, 140, 150, 160) of a gas turbine engine (10) comprising:
a monitoring sensor (210, 214, 216, 222, 224, 226), the monitoring sensor (210, 214, 216, 222, 224, 226) configured to obtain monitoring data, wherein a portion of the monitoring data relates to the condition of the component (130, 140, 150, 160) of the gas turbine engine (10);
a position sensor (219) for obtaining positional data relating to the component's position;
a processing module (230) configured to communicate with the position sensor (219) and monitoring sensor (210, 214, 216, 222, 224, 226), and configured to analyse the monitoring data and positional data to determine the portion of the monitoring data which relates to the component (130, 140, 150, 160) and determine a condition of the component (130, 140, 150, 160).

11. The monitoring system (200) according to Claim 10, wherein the monitoring sensor (210, 214, 216, 222, 224, 226) comprises at least one of: a camera (210, 226), a vibration sensor (214, 216, 224) and a microwave sensor (222).

12. The monitoring system (200) according to Claim 10 or Claim 11, wherein the component (130, 140, 150, 160) is a rotatable component coupled to a shaft (126, 127, 128) of the gas turbine engine (10) and configured to be rotatable around the shaft (126, 127, 128), and wherein the monitoring sensor (210, 214, 216, 222, 224, 226) and the position sensor (219) are configured to obtain data during rotation of the component around the shaft (126, 127, 128).

13. The monitoring system (200) according to Claim 12, further comprising a speed sensor (212, 220) configured to obtain the shaft speed data and communicate the shaft speed data to the processing module (230), the processing module (230) being configured to determine the condition of the component based upon the shaft speed data.

14. The monitoring system (200) according to Claim 12 or Claim 13, wherein the system further comprises an electrically-powered motor (218) configured to rotate the shaft (126, 127, 128).

15. The monitoring system (200) according to Claim 14, wherein the system comprises a control system (221) configured to control the motor so as to adjust the speed and/or rotational position of the shaft (126, 127, 128).

16. The monitoring system (200) according to Claim 15, wherein the processing module (230) is configured to communicate a test procedure to the control system (221), and the control system (221) is configured to execute the test procedure, the test procedure comprising:
using the motor (218) to adjust the speed and/or rotational position of the shaft (26); and
obtaining monitoring data at a range of speeds and/or rotational positions,
wherein the analysis of monitoring data to determine a condition of the component (130, 140, 150, 160) comprises analysis of the monitoring data obtained at the range of speeds and/or rotational positions, optionally wherein the processing module (230) comprises a computer (230b) remote from the sensors.
